# EUROPEAN PATENT SPECIFICATION

(11) **EP 3 924 629 B1**
(45) Date of publication and mention of the grant of the patent: **25.10.2023**
(21) Application number: 20710761.6
(22) Date of filing: 12.02.2020
(51) Int. Cl.: F16B 2/22, A44B 11/25, A44B 11/26, A44B 1/34, A44B 1/42, F16B 2/24, A41D 13/00, A41D 27/00, A45F 5/02, G08B 3/10, H04B 1/3888

(54) **SLIDING FASTENER FOR ATTACHING AN INSERTED BODY, IN PARTICULAR TO CLOTHING OR TEXTILES**
REISSVERSCHLUSS ZUR BEFESTIGUNG EINES EINGEFÜHRTEN KÖRPERS, INSBESONDERE AN KLEIDUNG ODER TEXTILIEN
DISPOSITIF DE FIXATION COULISSANT PERMETTANT DE FIXER UN CORPS INSÉRÉ, EN PARTICULIER SUR DES VÊTEMENTS OU DES TEXTILES

(30) Priority: 12.02.2019 CZ 20190078
(43) Date of publication of application: 22.12.2021
(73) Proprietor: Advintec Spol. S R.O., 10100 Prague (CZ)
(72) Inventor: MACHU, Ales, 76325 Ujezd (CZ)
(74) Representative: Sedlák, Jirí
(86) International application number: PCT/CZ2020/050005
(87) International publication number: WO 2020/164649

(56) References cited:
- DE-A1- 3 333 539
- ES-A1- 2 112 212
- US-A1- 2009 094 809
- US-B1- 6 176 401
- US-B2- 7 065 792

## Description

### Technical Field

The invention falls in the field of devices for attaching objects, in particular to clothing, in a sliding or hanging manner.

### Background Art

At present, a number of solutions is known in the field of fasteners, in particular for garments or textiles, which can be divided according to the method of attachment of an elastic buckle which slides on the desired surface, as well as clamps generating pressure, eventually also screwing fasteners.

The clips and other sliding fasteners are generally made of one material of the same thickness, with the manufacturer trying to find the optimum elasticity of the material, so that the retaining function of the fastener is still maintained and its insertion on the desired surface is possible. The problem of such a solution is the risk of damage to the surface, usually the fabric on which the fastener is slid, or deformation of the fastener. As the thickness of the surface on which the fastener is slid increases, the resistance and thus the force required to push the fastener on increase as well. Permanent deformation in soft materials and tear in thin more rigid materials can occur. In the case of low clamping force of the fastener, the retention is lost on thin materials and the fastener may be damaged by thicker, rigid materials. Frequent changes of material type, hard and soft or thin and thick, of the surface onto which the fastener is slipped are as well problematic with existing solutions.

According to the prior art, this problem may be limited by the use of different materials of a caliper as the outer part of the fastener, and a pressure element as the inner part of the fastener, such that the caliper is rigid and the pressure element is flexible. However, the use of different materials increases production costs and, by its very nature, makes the arrangement of the fastener more complicated. A fastener of the prior art is shown in US 6176401 B1.

### Summary of Invention

The subject of this invention is a sliding fastener for attaching an inserted body, in particular to clothing or other flexible fabric, or possibly to another surface, according to claim 1.

The invention is based on the fastener being formed by two fixed parallel surfaces which are rigid with respect to each other, forming a U-shaped caliper, between which a pressing element with a thickness lower than the thickness of one side of the caliper is located. According to the state of the art, the caliper and the pressing element may together form a single part, but according to the invention advantageously two parts, wherein the pressing element is located on a carrier connected to the caliper by a detachable or non-detachable joint.

Thus, sliding fastener is in a two-part embodiment, wherein the caliper and the pressing element carrier are connected to ensure their function, and the front side of the caliper is divided into multiple segments, wherein the pressing element carrier is detachably connected to the centre segment of the front side of the caliper.

This allows the body holder of a predefined shape to be integrated into the sliding fastener where the caliper is provided with a pocket for inserting the body on the front side, which is subsequently secured against its movement or falling out by the pressing element carrier provided with a raised edge.

For such integration of the sliding fastener with the body holder, it is utilized a three-segment split of the front side of the caliper, with a pressing element carrier attached to the centre segment of the front side of the caliper. This arrangement allows for the side segments of the front side of the caliper to continue in the shape of the body holder which adds to their rigidity while the centre segment of the front side of the caliper remains more flexible.

In such a case, the pressure element carrier can be connected to the centre segment of the front side of the caliper even by a non-detachable joint, since the removal of the body from the integrated holder does not require disconnection of the caliper and pressure element carrier, because the pressure element carrier can be pushed toward the rear side of the caliper to lower the raised edge and release the inserted body.

In order to achieve a further advantage over the prior art, it is necessary that the caliper allows only minimal flexion of the opposite sides of the caliper relative to each other, and the pressure element must be sufficiently flexible to allow its flexion against the caliper and at the same time generate enough pressure against the surface to which the fastener is attached. In the case where the caliper is flexible, the fastening is not sufficiently firm, and on the other hand the low elasticity of the pressure element makes it difficult to slide on the surface to which the fastener is to be attached.

This can be achieved according to the state of the art either by using different materials of the caliper and the pressing element, or according to the invention more advantageously having the caliper and the pressing element made of the same material, while the thickness of the pressing element in the longitudinal cross-section is significantly lower than the thickness of the caliper, most preferably in the range of 20 % to 40 % of the thickness of one side of the caliper. Furthermore, the pressing element is in the shape of an arch in the side cross-section, which facilitates the insertion and removal from the surface on which the fastener is to be attached.

Such arrangement is advantageous over the prior art in that it allows sliding of the fastener, in particular onto a surface such as flexible fabric, or even a rigid surface, with the proviso that, to maintain sufficient retention capability, the thickness of such surface is not relevant, provided that the thickness of such surface is lower than the distance between the inner opposite surfaces of the caliper.

### Brief Description of Drawings

**Fig.1**

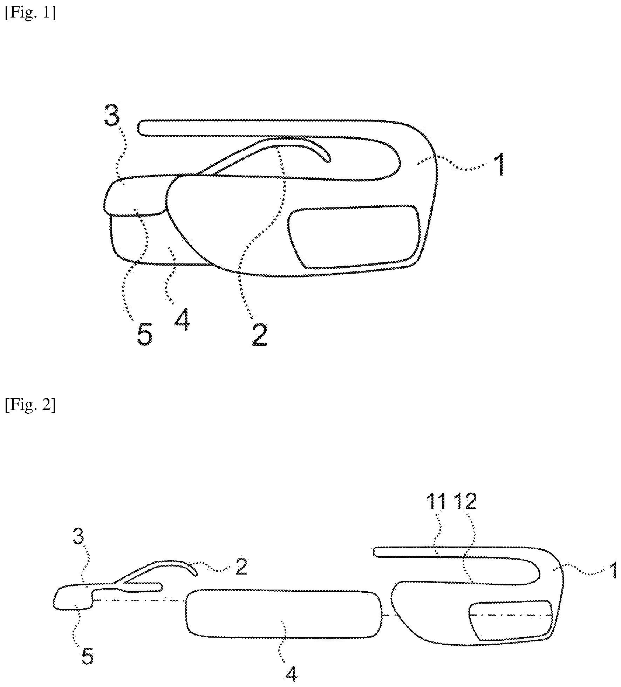

   [Fig.1] depicts side view of an assembled fastener according to the embodiment of the invention.
**Fig.2**
   [Fig.2] depicts side view of an unassembled fastener according to the embodiment of the invention.
**Fig.3**

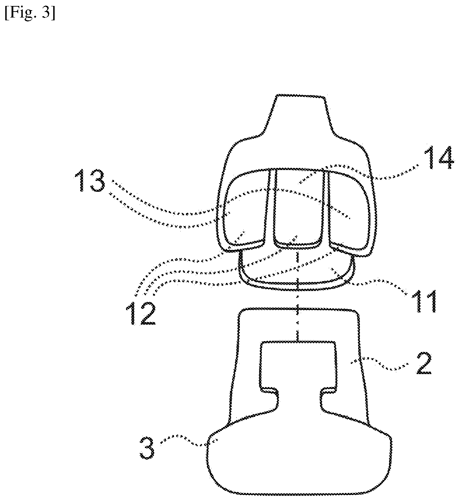

   [Fig.3] depicts lower front view of an unassembled fastener according to the embodiment of the invention.
**Fig.4**

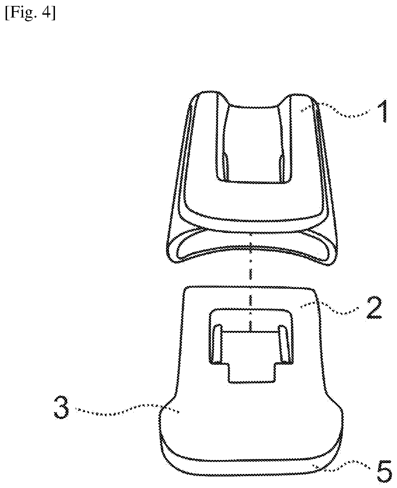

   [Fig.4] depicts lower rear view of an unassembled fastener according to the embodiment of the invention.

### Description of Embodiments

### Examples

The example describes a two-part design of a sliding fastener with an integrated body 4 holder.

The arrangement of such a fastener consists of two parts made of the same material such that the caliper 1 is a separate part to which the carrier 3 of the pressure element 2 is connected by a detachable joint.

The caliper 1 consists of three sides, a front side 12 parallel to a rear side 11, and a connecting side perpendicular to both such that the caliper 1 is in the side cross section in the shape of "U".

The front side 12 of the caliper 1 is divided into three segments such that the side segments 13 are rigid and the middle segment 14 is flexible, and the middle segment 14 is connected to the carrier 3 of the pressure element 2.

The caliper 1 is further equipped with a pocket on its front side 12 connected to the side segments 13 and into which the body 4 is inserted, and the carrier 3 of the pressing element 2 is equipped with a raised edge 5 to secure the body 4 in the pocket of the caliper 1.

The pressing element 2 is in the approximate shape of an arch and the thickness of the pressing element 2 is one third of the thickness of the rear side 11 of the caliper 1.

### Industrial Applicability

The sliding fastener is industrially applicable as a holder for various especially light and small devices, for example electronic devices.

## Claims

1. Sliding fastener for attaching an inserted body (4), in particular to clothing or textiles, comprising of a caliper (1) equipped with a pocket for insertion of the body (4) and a flexible pressure element (2), **characterized in that** the sliding fastener consists of the caliper (1) and a carrier (3) where a front side (12) of the caliper (1) consists of two longitudinal rigid side segments (13) and a longitudinal flexible middle segment (14) provided that the side segments (13) and a rear side (11) of the caliper (1) are mutually inflexible and the flexible pressure element (2) is a part of the carrier (3) which is slid onto the middle segment (14) of the front side (12) of the caliper (1) and the carrier (3) is provided with a raised edge (5) for securing the body (4).

2. Sliding fastener according to claim 1, **characterized in that** the caliper (1) and the pressure element (2) are made of the same material and the thickness of the pressure element (2) is lower than the thickness of the rear side (11) of the caliper (1).

## Patentansprüche

1. Schiebeverschluss zum Befestigen eines Einsteckkörpers (4), insbesondere an Bekleidung oder Textilien, umfassend einen mit einer Tasche zum Einstecken des Körpers (4) ausgestatteten Sattel (1) und ein flexibles Druckelement (2), **dadurch gekennzeichnet, dass** der Schiebeverschluss aus dem Sattel (1) und einem Träger (3) besteht, wobei eine Vorderseite (12) des Sattels (1) aus zwei starren Längsseitensegmenten (13) und einem flexiblen Mittellängssegment (14) besteht, sofern die Seitensegmente (13) und eine Rückseite (11) des Sattels (1) zueinander unflexibel sind und das flexible Druckelement (2) ein Teil des Trägers (3) ist, der auf das Mittelsegment (14) der Vorderseite (12) des Sattels (1) aufgeschoben ist und der Träger (3) mit einem erhöhten Rand (5) zur Befestigung des Körpers (4) versehen ist.

2. Schiebeverschluss nach Anspruch 1, **dadurch gekennzeichnet, dass** der Sattel (1) und das Druckelement (2) aus dem gleichen Material bestehen und die Dicke des Druckelements (2) geringer ist als die Dicke der Rückseite (11) des Sattels (1).

## Revendications

1. Fermeture à glissière pour fixer un corps inséré (4), notamment sur un vêtement ou un textile, comprenant un étrier (1) équipé d'une poche d'insertion du corps (4) et un élément de pression flexible (2), **caractérisée en ce que** la fermeture à glissière est composée de l'étrier (1) et d'un support (3), où une face avant (12) de l'étrier (1) est composée de deux segments latéraux rigides longitudinaux (13) et d'un segment médian longitudinal flexible (14), à condition que les segments latéraux (13) et une face arrière (11) de l'étrier (1) sont mutuellement rigides et l'élément de pression flexible (2) fait partie du support (3) qui est glissé sur le segment médian (14) de la face avant (12) de l'étrier (1) et le support (3) est pourvu d'un bord surélevé (5) pour fixer le corps (4).

2. Fermeture à glissière selon la revendication 1, **caractérisée en ce que** l'étrier (1) et l'élément de pression (2) sont du même matériau et l'épaisseur de l'élément de pression (2) est inférieure à l'épaisseur de la face arrière (11) de l'étrier (1).
